# FASCICULE DE BREVET EUROPEEN

(11) **EP 0 782 824 B1**
(45) Date de publication et mention de la délivrance du brevet: **17.04.2002**
(21) Numéro de dépôt: 97390001.2
(22) Date de dépôt: 07.01.1997
(51) Int. Cl.: A23G 9/28

(54) **Procédé et appareil pour la distribution de produits alimentaires glacés, notamment sous la forme de boules glacées**
Verfahren und Vorrichtung zum Spenden von gefrorenen Produkten, insbesondere kugelformigen Speiseeisen
Process and apparatus for the dispensing of frozen food products, in particular in the form of ice cream balls

(30) Priorité: 08.01.1996 FR 9600341
(43) Date de publication de la demande: 09.07.1997
(73) Titulaire: GELDOC S.A., 12450 La Primaube (FR)
(72) Inventeur: Jean, Alain, 82200 Moissac (FR); Laur, Michel, 12450 Flavin (FR)
(74) Mandataire: Morelle, Guy Georges Alain

(56) Documents cités:
- EP-A- 0 591 577
- NL-A- 7 612 388
- US-A- 1 622 348
- US-A- 1 774 708
- US-A- 2 638 064
- US-A- 2 728 306
- US-A- 5 080 572
- US-A- 5 240 139

## Description

La présente invention se rapporte au domaine de la distribution de produits alimentaires glacés, et plus particulièrement aux procédés et appareils pour la coupe et la distribution d'un ou plusieurs volumes secondaires de produits alimentaires glacés adoptant notamment la forme d'une ou plusieurs boules glacées, à partir d'un ou plusieurs volumes primaires de ces produits alimentaires glacés adoptant notamment la forme d'un ou plusieurs pains glacés.

Les procédés connus pour la distribution de boules glacées sent des procédés manuels qui consistent à former un volume de crème glacée ou sorbet adoptant approximativement la forme d'une boule au moyen d'un outil à main comportant un logement en forme de demi-sphère. Pour distribuer aux consommateurs des boules glacées, un opérateur saisi l'outil dans une main, puis procède à de multiples raclages de la surface supérieure d'un pain glacé avec l'outil à main afin de prélever un volume glacé apte à la consommation, celui-ci comportant tout au plus une partie hémisphérique en raison de la demi-sphère de l'outil. Une fois que le volume glacé à été recueilli dans l'outil, l'opérateur utilise ensuite généralement un moyen de libération de ce volume qui adhère en général à l'outil.

Ces procédés présentent l'inconvénient essentiel d'être très fastidieux à l'usage pour l'opérateur qui doit racler énergiquement la surface dure d'un pain glacé dans des positions souvent inconfortables en raison de l'encombrement de l'appareil volumineux dans lequel est conservé un nombre important de pains glacés correspondant notamment à divers parfum, puis qui doit ensuite s'évertuer à libérer le volume obtenu dans une coupe ou un cornet alors que celui-ci adhère parfaitement à l'outil. Ces inconvénients essentiels font que les opérateurs restent réticents à proposer ce type de produit glacé aux consommateurs, lequel est pourtant relativement rentable. Un autre inconvénient réside dans le procédé de prélèvement du volume glacé à distribuer, lequel ne permet pas le prélèvement d'un volume constant, ni d'un volume à surface extérieure régulière. Cet inconvénient peut entraîner une diminution de la rentabilité financière d'un volume donné de pain glacé, à partir duquel des quantités différentes de boules glacées peuvent être prélevées, notamment en fonction des différences de pratique de chaque opérateur, une boule glacée étant généralement vendue à la pièce et non au poids ; dans tous les cas, il n'est pas possible de prévoir précisément les marges effectuées à partir d'un pain glacé donné.

On connaît le document EP-A-0 591 577 qui a pour objet un procédé et une machine pour la distribution automatique de glace, de forme notamment hémisphérique, cette dernière comprenant un outil de coupe mobile dans les trois dimensions X, Y, et Z de l'espace pour atteindre un bloc de glace au choix positionné sur un plateau. Les mouvements horizontaux de la pelle sont obtenus par des guides comportant une rainure hélicoïdale, manoeuvrés par des moteurs électriques et le mouvement vertical de la pelle est obtenu par un support télescopique. L'outil de coupe comporte un corps parallélépipédique à base carrée surmonté d'une partie hémisphérique contenant une paroi hémisphérique mobile par rapport au corps pour former la boule de glace en demi-sphère, la paroi hémisphérique contenant une palette courbe mobile par rapport à celle-ci pour pousser la boule de glace formée, hors du corps. L'outil de coupe comporte de plus un couteau horizontal commandé par un actionneur pneumatique qui permet de déplacer ce couteau entre une position de repos libérant la partie-inférieure du corps et une position de travail dans laquelle la partie inférieure du corps est obturée. Le procédé de formation, à partir du bloc de glace, du volume de glace à distribuer consiste, après avoir positionné l'outil en X et Y à enfoncer les bords libres de l'outil de coupe dans le bloc de glace suivant l'axe Z pour isoler en partie la portion désirée, puis à actionner le couteau pour le placer dans sa position de travail, séparant ainsi totalement la portion de glace du bloc et l'enfermant en même temps dans le corps, puis à actionner la paroi hémisphérique pour façonner en forme de demi-sphère et contre le couteau en position de travail, la portion de glace découpée. La portion de glace découpée et formée, est ensuite déplacée au-dessus d'un cône, puis libérée dans celui-ci en plaçant le couteau en position de repos et en actionnant la palette courbe pour pousser la portion de glace hors du corps de l'outil de coupe. De manière alternative, la libération de la portion de glace dans le cône peut être effectuée par jets d'air en remplacement de la palette. Un tel procédé tasse la glace sans contrôle, et ne permet donc pas d'optimiser les qualités organoleptiques et plus particulièrement gustatives de ce type de produit.

On connaît également le document US-A-2 638 064 qui se rapporte à une machine de distribution de glace comprenant un système complexe de leviers permettant en un aller-retour d'un levier déterminé, de couper une portion de glace dans la partie inférieure d'une colonne de glace, par déplacement d'un couteau ou cisaille sectionnant la colonne de glace par compression, de déplacer par translation horizontale la portion coupée dans un moule ouvert en deux parties, une supérieure et une inférieure, cette dernière étant composée de deux moitiés séparables, de refermer le moule en abaissant sa partie supérieure sur la partie inférieure pour façonner en forme de demi-sphère la portion de glace coupée et placée dans le moule, de relever la partie supérieure du moule tout en obligeant la portion façonnée de glace à rester dans la partie inférieure du moule, d'écarter les deux moitiés de la partie inférieure du moule afin de libérer la portion façonnée de glace dans un réceptacle approprié, de faire descendre la colonne de glace afin de permettre la distribution d'une nouvelle portion de glace suivant le cycle ci-dessus. Outre la complexité de la machine et la séparation des opérations de prélèvement et de façonnage des volumes de glace distribués, comme pour le document précédent, ce document enseigne un procédé qui ne permet pas un contrôle du foisonnement du volume de produit glacé distribué.

La présente invention a pour objectif essentiel de remédier à ces inconvénients. Plus précisément, elle consiste en un procédé pour la coupe et la distribution d'au moins un volume secondaire d'un produit alimentaire glacé, notamment crème glacée ou sorbet, à partir d'au moins un volume primaire dudit produit alimentaire glacé, consistant à :
positionner ledit volume primaire sur des moyens de support selon une position de référence,
réfrigérer ledit volume primaire,
placer des moyens de coupe, à partir d'une position initiale, dans une première position de coupe dudit volume primaire, par rapport à ladite position de référence dudit volume primaire et à une forme initiale dudit volume primaire,
couper ledit volume primaire pour séparer un premier volume secondaire par l'intermédiaire desdits moyens de coupe,
façonner ledit premier volume secondaire selon une forme déterminée,
transporter ledit premier volume secondaire, puis libérer ledit premier volume secondaire dans un réceptacle,
placer lesdits moyens de coupe dans ladite position initiale, caractérisé en ce qu'il consiste à couper ledit volume primaire en déplaçant un premier tranchant sur une partie au moins de la longueur dudit volume primaire, pour permettre l'usinage d'une première lamelle dudit volume primaire, ladite première lamelle étant apte à constituer ledit premier volume secondaire, et à façonner ledit premier volume secondaire lors dudit déplacement dudit premier tranchant.

Le procédé selon l'invention permet, grâce à l'usinage par lamelle de produit glacé, de contrôler les dimensions de la ou des lamelles retirées du volume primaire, et de ce fait de contrôler de manière précise la quantité de produit glacé constituant le volume secondaire distribué. Ainsi, le procédé selon l'invention permet une maîtrise excellente du foisonnement ou compression de la glace distribuée, comme expliqué plus loin à l'aide d'un exemple de mode de réalisation. Ainsi que cela est largement connu des fabricants de produits glacés, les qualités organoleptiques et plus particulièrement gustatives de ce type de produit sont intimement liées à son foisonnement.

Le procédé selon l'invention permet en outre de distribuer un volume secondaire glacé, notamment une boule glacée, à partir d'un volume primaire glacé, notamment un pain de glace ou de sorbet selon un conditionnement traditionnel, avantageusement de manière automatique avec une intervention réduite au minimum d'un opérateur, laquelle peut consister en une simple pression sur un organe de commande déclenchant la distribution automatique d'un volume secondaire glacé, comme cela sera également expliqué plus loin à l'aide d'un exemple de mode de réalisation.

Selon une caractéristique avantageuse, le procédé selon l'invention consiste à couper ledit volume primaire en déplaçant un deuxième tranchant placé en vis à vis dudit premier tranchant, en sens inverse dudit premier tranchant, sur une partie au moins de la longueur dudit volume primaire, pour permettre l'usinage d'une deuxième lamelle dudit volume primaire, ladite deuxième lamelle étant apte à constituer ledit premier volume secondaire avec ladite première lamelle.

Selon une autre caractéristique avantageuse, le procédé selon l'invention consiste additionnellement à placer lesdits moyens de coupe dans une deuxième position de coupe dudit volume primaire par rapport à ladite position de référence dudit volume primaire, par rapport ladite forme initiale dudit volume primaire, et par rapport à une déduction dudit premier volume secondaire, couper ledit volume primaire pour séparer un deuxième volume secondaire par l'intermédiaire desdits moyens de coupe.

Cette caractéristique permet de distribuer successivement plusieurs volumes secondaires en rationalisant la coupe du volume primaire par une prise en compte des prélèvement de volumes secondaires déjà effectués.

La présente invention a également pour objet un appareil pour la coupe et la distribution d'au moins un volume secondaire de produit alimentaire glacé, notamment crème glacée ou sorbet, à partir d'au moins un volume primaire dudit produit alimentaire glacé.

L'invention sera mieux comprise et d'autres avantages et caractéristiques apparaîtront à la lecture qui suit d'un exemple de mode de réalisation d'un appareil et d'un procédé selon l'invention, accompagné des dessins annexés, exemples donnés à titre d'illustration.

La figure 1 représente une vue en perspective éclatée partiellement d'un exemple de mode de réalisation d'un appareil selon l'invention.

La figure 2 représente un exemple de schéma fonctionnel pneumatique de l'appareil représenté sur la figure 1.

La figure 3 montre une vue de face en coupe partielle d'un détail agrandi de la figure 1.

La figure 4 représente une vue de face en coupe agrandie d'un volume primaire de produit alimentaire glacé.

La figure 5 représente en vue de dessus le volume primaire de la figure 4.

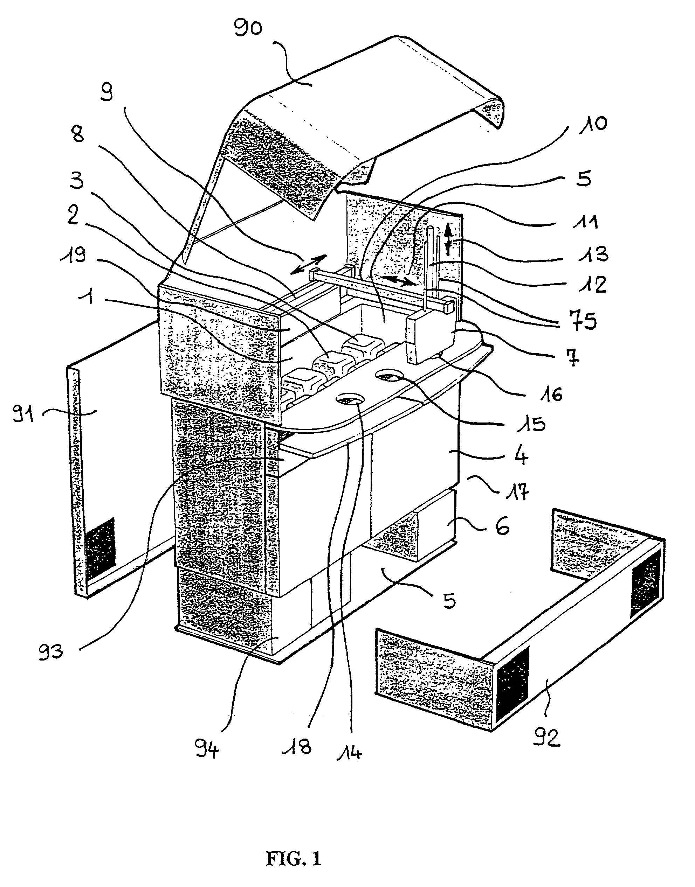

L'appareil représenté sur la figure 1, pour la coupe et la distribution d'au moins un volume secondaire de produit alimentaire glacé, notamment crème glacée ou sorbet, à partir d'au moins un volume primaire du produit alimentaire glacé, comprend des moyens de support du volume primaire au moins, permettant d'établir une position de référence du volume primaire, des moyens de coupe du volume primaire au moins, permettant une séparation du volume secondaire du volume primaire, des moyens de positionnement des moyens de coupe, coopérant avec les moyens de support du volume primaire au moins, pour permettre un positionnement des moyens de coupe en position de coupe du volume primaire, des moyens de façonnage du volume secondaire selon une forme déterminée, des moyens de réfrigération du volume primaire au moins, permettant de maintenir le volume primaire selon une forme et une température déterminées, des moyens de transport du volume secondaire, des moyens de libération du volume secondaire dans un réceptacle.

Les moyens de support 1 comprennent une surface avantageusement horizontale sur laquelle une pluralité de volumes primaires 2, 3 de crèmes glacées ou sorbets, correspondant par exemple à des parfums différents, par exemple huit à dix volumes primaires, sont disposés selon des emplacements prévus à cet effet. La surface horizontale sera avantageusement rugueuse de manière à permettre une meilleure adhérence des volumes primaires sur celle-ci. Les moyens de support comprennent des parois latérales 5 verticales sur le pourtour de la surface horizontale et solidaires de celle-ci. La surface horizontale et les parois latérales détermineront un espace intérieur dans lequel sont disposés les volumes primaires, pour lequel une température de réfrigération apte à maintenir en forme les volumes primaires glacés pourra être maintenue. A cet effet tout type de paroi connu comportant des moyens d'isolation thermique pourra être utilisée, par exemple des parois utilisées traditionnellement dans les congélateurs.

Les moyens de support des volumes primaires seront soutenus par un meuble 4, lequel pourra avantageusement comprendre un congélateur pour la conservation de volumes primaires de produits alimentaires glacés destinés à remplacer les volumes primaires épuisés sur les moyens de support. Le meuble 4 sera avantageusement soutenu par une structure (non représentée) permettant de former un espace 5 libre entre le bas du meuble 4 et le sol afin de loger divers éléments permettant un fonctionnement de l'appareil comme cela expliqué plus loin.

Les moyens de réfrigération comprennent un compresseur froid et un échangeur thermique (non représentés) permettant de maintenir une température de conservation des volumes primaires et de maintien en forme de ces derniers dans l'espace intérieur des moyens de support défini ci-dessus. Le groupe froid et l'échangeur thermique utilisés pour l'espace intérieur des moyens de support pourront avantageusement être indépendants de ceux du congélateur du meuble 4 le cas échéant afin de permettre une sécurité de fonctionnement indépendante et des plages de température de fonctionnement différentes. La température devant être maintenue dans l'espace intérieur des moyens de support sera avantageusement comprise entre -10° C et -30° C, et de préférence entre -18°C et -30°C, selon tout moyen connu, par exemple les moyens utilisés pour les appareils connus de conservation et de présentation des glaces ou sorbets en pain à partir desquels un opérateur distribue des glaces en boules aux consommateurs. Le compresseur froid sera de préférence logé dans l'espace 5 libre entre le bas du meuble 4 et le sol, dans un bloc 6 comme représenté sur la figure 1.

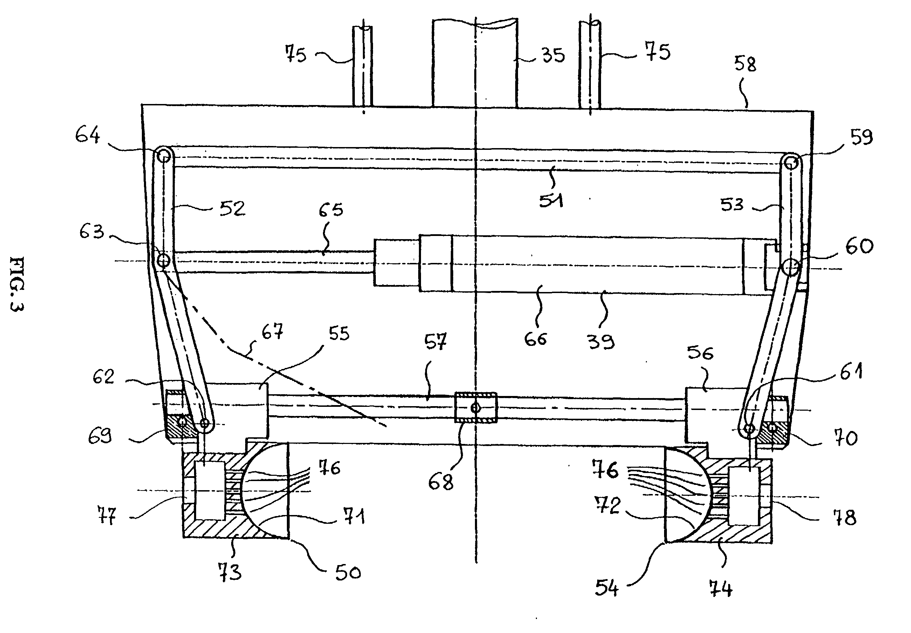

Les moyens de coupe du volume primaire et les moyens de façonnage du volume secondaire selon une forme déterminée sont représentés ensemble de manière symbolique sur la figure 1 par la référence 7, pour des raisons de facilité de compréhension de cette figure. Les moyens de coupe et les moyens de façonnage seront décrits de manière détaillée ci-après à l'aide de la figure 3.

Les moyens de positionnement des moyens de coupe doivent permettre de positionner les moyens de coupe en position de coupe du volume primaire choisi placé dans l'espace intérieur défini par les moyens de support. A cet effet, les moyens de positionnement des moyens de coupe comprennent des premiers 8 moyens de déplacement des moyens de coupe selon une première 9 direction horizontale, des deuxièmes 10 moyens de déplacement des moyens de coupe selon une deuxième 11 direction horizontale perpendiculaire à la première 9 direction horizontale, des troisièmes 12 moyens de déplacement des moyens de coupe selon une direction verticale 13 perpendiculaire aux première et deuxième directions horizontales.

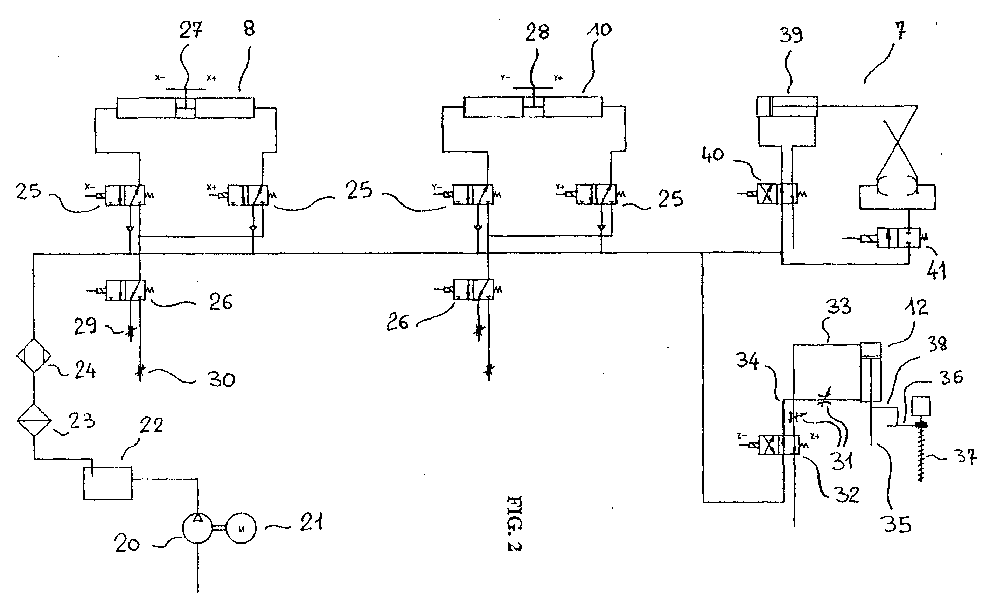

Les premiers, deuxièmes, et troisièmes moyens de déplacement sont placés au dessus de l'espace intérieur défini par les moyens de support, comme représenté sur la figure 1, et comprennent avantageusement un premier 8, un deuxième 10 et un troisième 12 vérins pneumatiques à double effet respectivement, comme cela sera expliqué plus loin à l'aide de la figure 2. Le débattement des premiers 8, deuxièmes 10, et troisièmes 12 moyens de déplacement selon les directions 9, 11, 13 respectivement permettra aux moyens de coupe une accessibilité à l'espace intérieur défini par les moyens de support de manière à autoriser une distribution des volumes secondaires à partir des volumes primaires jusqu'à la surface horizontale des moyens de support.

Le premier 8 vérin pneumatique comprend un corps lié de manière rigide aux moyens de support sur un côté de ceux-ci et un piston mobile lié de manière rigide à une première extrémité du corps du deuxième 10 vérin pneumatique placé horizontalement et perpendiculairement au premier vérin comme représenté sur la figure 1. Le corps du troisième 12 vérin pneumatique vertical est lié de manière rigide au piston mobile du deuxième 10 vérin pneumatique, la tige mobile du troisième vérin étant solidaire des moyens de coupe 7 comme cela sera expliqué plus loin. La deuxième extrémité du corps du deuxième 10 vérin sera soutenue par un rail de guidage (non représenté) du déplacement du deuxième vérin, ou de manière alternative pourra être liée au piston mobile d'un quatrième vérin (non représenté) placé horizontalement et parallèlement au premier 8 vérin, le corps du quatrième vérin étant dans ce cas lié rigidement aux moyens de support.

Les moyens de coupe 7 possèdent ainsi trois degrés de liberté de déplacement en translation selon les première 9 et deuxième 11 directions horizontales et selon la direction verticale 13 permettant de les positionner selon un point de l'espace intérieur défini par les moyens de support afin que les moyens de coupe puissent être placés en position de coupe de n'importe lequel des volumes primaires placés sur les moyens de support. A cet effet, les moyens de positionnement des moyens de coupe comprennent des capteurs à fourches électroniques (non représentés) permettant d'obtenir un positionnement des moyens de coupe dans le plan horizontal avec une précision de l'ordre du millimètre. Un capteur sera fixé sur le vérin 10 en regard d'un support gradué lui-même fixé sur le vérin 8. De manière similaire, un capteur sera fixé sur le vérin 12 par exemple en regard d'un support gradué fixé sur le vérin 10. Les capteurs sont connectés à une électronique de commande, et permettent ainsi de gérer le déplacement des vérins horizontaux de positionnement des moyens de coupe en fonction d'une position à atteindre pour les moyens de coupe par rapport aux volumes primaires comme expliqué plus loin.

Les moyens de transport du volume secondaire comprennent avantageusement les premiers, deuxièmes, et troisièmes moyens de déplacement des moyens de coupe définis ci-dessus. Les moyens de transport permettent de transporter le volume secondaire une fois séparé du volume primaire du point de séparation à un point de distribution du volume primaire. A cet effet, les moyens de transport comprennent les premier 8, deuxième 10, et troisième 12 vérins. La figure 1 représente trois ouvertures 14, 15, 16 de distribution des volumes secondaires, par exemple. Les trois ouvertures de distribution sont placées sur la face frontale 17 de l'appareil selon l'invention accessible à un opérateur. L'appareil comporte une table 18 permettant de poser un réceptacle (non représenté) au dessous de l'ouverture désirée ou de chacune des ouvertures de distribution, le ou les réceptacles étant destinés à recueillir les volumes secondaires distribués. De manière avantageuse, la table 18 sera placée à une hauteur permettant d'éviter d'utiliser le troisième vérin vertical pour la distribution des volumes secondaire, comme cela sera expliqué plus loin.

Un exemple de mode de réalisation d'un circuit pneumatique comprenant les vérins 8, 10, 12 à double effet est représenté sur la figure 2 de manière schématique. Il est à noter que la figure 2 ne montre pas les liaisons mécaniques entre vérins et entre vérin et moyens de coupe détaillées ci-dessus pour des raisons de simplification et de facilité de compréhension de la figure. Le circuit pneumatique comprend un compresseur d'air 20 entraîné par un moteur électrique 21, permettant de fournir l'air comprimé nécessaire au fonctionnement des vérins 8, 10, 12, des moyens de coupe 7, et des moyens de libération du volume secondaire. L'air comprimé sortant du compresseur traverse un réservoir de stockage 22, un filtre 23 et un dispositif de séchage 24, de manière conventionnelle avant d'être distribué aux vérins à double effet par l'intermédiaire de distributeurs, comme expliqué ci-après.

Les deux vérins 8 et 10 à double effet horizontaux permettant aux moyens de coupe de balayer un plan horizontal sont chacun alimenté en air comprimé par exemple par l'intermédiaire de deux distributeurs à trois voies portant la référence 25 sur la figure 2. Les échappements de chacun des vérins 8 et 10 sont connectés à un distributeur à trois voies portant la référence 26 sur la figure 2, permettant d'obtenir avantageusement une vitesse lente et une vitesse rapide de déplacement des pistons 27, 28,selon la position sélectionnée du distributeur 26. Les valeurs désirées des vitesses lente et rapide sont obtenues par exemple au moyen de deux régulateurs de débit 29 et 30 à débit variable placés respectivement en sortie de chacun des distributeurs 26, comme représenté sur la figure 2.

Le vérin vertical 12 à double effet est alimenté en air comprimé par l'intermédiaire d'un distributeur à quatre voies portant la référence 32 sur la figure 2, et d'un régulateur de débit 31 à débit variable placé en aval du distributeur 32 sur chacune des deux conduites 33, 34 alimentant le vérin vertical 12 comme représenté sur la figure 2. Les régulateurs de débit 31 permettent avantageusement un réglage différencié de la montée et de la descente du piston 35 du vérin 12, portant les moyens de coupe 7. Le déplacement du piston 35 du vérin vertical 12 est avantageusement limité vers le bas par une butée 36 réglable en hauteur pour limiter le déplacement des moyens de coupe selon ladite direction verticale de manière réglable. Ainsi, la butée 36 permet de positionner les moyens de coupe à la hauteur désirée par rapport à la hauteur du volume primaire à couper. Le réglage en hauteur de la butée est obtenu au moyen d'un moteur électrique comportant un axe fileté 37 vertical sur lequel se déplace un écrou auquel est fixé de manière rigide la butée 36, comme représenté schématiquement sur la figure 2. Le moteur est avantageusement lié de manière rigide (non représenté) au corps du vérin vertical 12 selon tout moyen connu, par exemple par vis. La butée 36 est liée en rotation au corps du vérin 12 ou au moteur électrique de manière à lui permettre un déplacement en translation uniquement. Le piston 35 du vérin 12 comporte un axe possédant une butée 38 apte à venir en appui sur la butée réglable 36 selon la position choisie de celle-ci.

Le compresseur 20 alimente en air comprimé un vérin 39 à double effet intervenant dans les moyens de coupe 7 représentés schématiquement sur la figure 2, comme cela sera expliqué ci-après avec l'aide de la figure 3. Le vérin 39 est alimenté par l'intermédiaire d'un distributeur 40 à quatre voies, comme représenté sur la figure 2.

Le compresseur 20 alimente également en air comprimé les moyens de libération du volume secondaire par l'intermédiaire d'un distributeur 41 à deux voies, comme représenté sur la figure 2, et comme cela sera expliqué plus loin.

La puissance du compresseur 20 sera avantageusement choisie de manière à ce qu'il permette une alimentation simultanée au moins des deux vérins horizontaux 8 et 10 de manière à réduire les temps de déplacement des moyens de coupe, et les temps de transport d'un volume secondaire. Le compresseur 20 sera de préférence logé dans l'espace libre 5 entre le bas du meuble 4 et le sol, dans un bloc 94 comme représenté sur la figure 1.

Les vérins horizontaux 8 et 10 seront choisis parmi les vérins couramment utilisés dans le domaine pneumatique, la longueur de chacun des vérins 8, 10 correspondant sensiblement à la longueur de chacun des deux côtés de la surface horizontale respectivement, sur laquelle sont placés les volumes primaires, comme représenté sur la figure 1. Afin de permettre un balayage de la surface occupée par les volumes primaire comme expliqué plus haut, le corps du deuxième vérin 10 sera fixé sur le piston 27, et le corps du troisième vérin 12 sera fixé sur le piston 28 du deuxième vérin 10, selon tout moyen connu, par exemple par vis.

Les conduites d'air comprimé alimentant le deuxième vérin 10, le troisième vérin 12, le vérin des moyens de coupe, et les moyens de libération du volume secondaire seront réalisées dans des matériaux souples, compatibles avec le déplacement de ces organes. L'ensemble des distributeurs pneumatiques peut être réuni dans un logement 19 prévu à cet effet, comme représenté sur la figure 1, placé sous le vérin 8 horizontal par exemple, afin d'être situé le plus proche possible des vérins pneumatiques.

Les moyens de coupe comprennent au moins un premier tranchant 50 et des premiers moyens de déplacement 39, 51, 52 du premier tranchant sur une partie au moins de la longueur du volume primaire pour permettre l'usinage d'une première lamelle du volume primaire, la première lamelle étant apte à constituer le volume secondaire.

L'exemple de mode de réalisation des moyens de coupe représentés sur la figure 3 comprend additionnellement un deuxième tranchant 54 placé en vis à vis du premier tranchant 50, et des deuxièmes moyens de déplacement 39, 51, 53 du deuxième tranchant sur une partie au moins de la longueur du volume primaire (non représenté sur la figure 3) pour permettre l'usinage d'une deuxième lamelle (non représenté sur la figure 3) du volume primaire, la deuxième lamelle étant apte à constituer le volume secondaire avec la première lamelle.

Les moyens de coupe comprennent un cadre rigide 58 sur un côté duquel est fixé un axe 57 de guidage du déplacement des tranchants 50 et 54 par l'intermédiaire de manchons 55 et 56 portant ces derniers respectivement, comme représenté sur la figure 3. Le vérin à double effet 39 permet l'écartement et le rapprochement des tranchants 50 et 54 grâce à un système de trois bielles 51, 52, 53 mobiles. Comme le représente la figure 3, une des extrémités de chacune des bielles 52 et 53 est reliée à l'une et l'autre des extrémités de la bielle 51 respectivement, l'autre extrémité de chacune des bielles 52 et 53 étant reliée à l'un et l'autre des manchons 55, 56 respectivement. Chacune des extrémités du vérin 39 est reliée à la partie centrale de chacune des bielles 52, 53 respectivement. Les liaisons entre bielles, entre bielles et vérins, et entre bielles et manchons sont des liaisons à un degré de liberté en rotation autour d'axes 59 à 64 perpendiculaires au plan de la feuille. Lorsque le vérin 39 est actionné à partir de la position représentée sur la figure 3, c'est à dire lorsque la tige 65 du piston du vérin 39 rentre dans le corps 66 du vérin, les bielles 52 et 53 pivotent par rapport à la bielle 51 autour des axes 59 et 64 de rotation, ce qui entraîne le rapprochement simultané des manchons 55 et 56 guidés en translation dans leurs déplacements par l'axe 57, et une translation vers le bas de la bielle 51 et du vérin 39. Lorsque la tige 65 du vérin 39 est rentrée, les manchons 55 et 56 sont en appui sur une butée 68 fixée sur l'axe 57, les tranchants 50 et 54 étant alors quasiment jointifs, sans toutefois être en contact afin d'éviter toute détérioration de ceux-ci. Un trait mixte 67 fort représente sur la figure 3 la position de la bielle 52 lorsque les manchons 55 et 56 sont en appui sur la butée 68. Le guidage en translation de la bielle 51 peut avantageusement être assuré par un cadre 58 comportant deux plaques parallèles liées rigidement entre elles et écartées l'une de l'autre par l'intermédiaire d'entretoises, entre lesquelles sont logés les bielles 51, 52, 53 et le vérin 39. Lorsque le vérin est en position tige 65 sortie, les manchons 55 et 56 sont en appui sur deux butées 69 et 70 respectivement placées respectivement à l'une et l'autre des extrémités de l'axe 57, comme représenté sur la figure 3. Il est à noter que les butées 69 et 70 peuvent notamment être utilisées comme entretoises d'écartement des plaques du cadre 58 comme expliqué ci-dessus.

L'appareil selon l'invention comprend des moyens de façonnage 71, 72 du volume secondaire selon une forme déterminée. Sur la figure 3, les moyens de façonnage du volume secondaire sont solidaires du premier tranchant lorsqu'un seul tranchant est utilisé, ou des premier 50 et deuxième 54 tranchants comme représenté sur la figure 3, pour façonner le volume secondaire lors d'un déplacement du premier tranchant ou des premier et deuxième tranchants. Les moyens de façonnage comprennent une première 71 et une deuxième 72 formes concaves, une partie d'une arête libre 50 de la première forme 71 concave constituant le premier tranchant, et une partie d'une arête libre 54 de la deuxième forme 72 concave constituant le deuxième tranchant. Les première et deuxième formes concaves sont respectivement formées dans un premier 73 et un deuxième 74 blocs fixés rigidement aux manchons 55 et 56 respectivement. Le matériau pour la réalisation des blocs 73 et 74 pourra être tout matériau rigide approprié au contact alimentaire, par exemple un acier inoxydable ou analogue.

Les première 71 et deuxième 72 formes concaves pourront être différentes, leurs arêtes libres respectives devant toutefois être aptes à permettre aux tranchants 50 et 54 d'être avantageusement quasiment jointifs lorsque les formes concaves 71 et 72 sont adjacentes, comme expliqué plus haut. Sur la figure 3, les formes concaves 71 et 72 sont avantageusement hémisphériques permettant d'obtenir un volume secondaire sphérique. Il est à noter que les formes concaves 71 et 72 peuvent adopter toute autre forme, notamment fonction d'un critère esthétique, par exemple des formes de calottes sphériques, notamment dissymétriques, permettant d'obtenir un volume secondaire adoptant la forme d'une lentille biconvexe, ou des formes de demi-cylindres, permettant d'obtenir un volume secondaire adoptant la forme d'un cylindre.

On notera avantageusement sur la figure 2 que l'alimentation en air comprimé du vérin 39 pour une rentrée de la tige de celui-ci ne comporte pas de régulateur de débit afin de disposer d'une puissance maximum pour la coupe du volume primaire lors du rapprochement des tranchants 50 et 54.

Les moyens de coupe sont fixés de manière rigide à la tige 35 du vérin vertical 12 par l'intermédiaire du cadre 58. Le déplacement vertical des moyens de coupe sera guidé de manière à assurer un seul degré de liberté en translation au cadre 58 relativement au corps du vérin vertical 12, par exemple au moyen de barres de guidage 75 comme représenté sur la figure 1.

L'appareil selon l'invention comprend des moyens de libération du volume secondaire dans un réceptacle. De manière avantageuse, les moyens de libération du volume secondaire comprennent les premiers moyens de déplacement du premier tranchant. Lorsque les blocs 73 et 74 sont adjacents, le vérin 39 étant en position tige rentrée, le volume secondaire ayant été prélevé par l'usinage d'une première et d'une deuxième lamelles à partir du volume primaire lors du rapprochement des tranchants 50 et 54 respectivement, et ayant été façonné par les formes concaves 71 et 72 lors du même déplacement des tranchants 50 et 54 respectivement, le volume secondaire se trouve emprisonnée entre les deux formes concaves 71 et 72 adjacentes par leurs arêtes libres, les moyens de coupe portant le volume secondaire sont alors transportés au dessus du réceptacle choisi comme décrit plus haut.

Les moyens de libération du volume secondaire sont actionnés quand les blocs adjacents 73 et 74 sont positionnés au dessus du réceptacle, par la sortie de la tige 65 du vérin 39, laquelle entraîne une séparation des deux formes concaves et la libération du volume secondaire dans le réceptacle choisi. Afin d'améliorer la libération du volume secondaire et de diminuer l'adhérence de celui-ci aux formes concaves 71 et 72, les moyens de libération du volume secondaire comprennent au moins un trou 76, réalisé avantageusement dans chacune des formes concaves 71 et 72, comme représenté sur la figure 3. Les trous 76 sont alimentés en air comprimé par l'intermédiaire de deux conduites (non représentées sur la figure 3) raccordées aux blocs 73 et 74 dans des arrivées 77 et 78 respectivement prévues à cet effet, et reliées au distributeur 41 à deux voies, comme représenté sur les figures 2 et 3. L'alimentation en air comprimé par les trous 76 est réalisée avantageusement simultanément à l'écartement des blocs 73 et 74 au moyen du vérin 39 de manière que le volume secondaire soit libéré à l'endroit désiré sous l'effet de poussées appropriées.

Les moyens de coupe 7 seront avantageusement maintenus, lorsqu'ils ne sont pas en service, dans une position initiale, par exemple dans l'espace intérieur réfrigéré des moyens de support dans lequel se trouvent les volumes primaires.

L'appareil selon l'invention peut avantageusement fonctionner de manière automatique par l'intermédiaire d'un centre de commande (non représenté) comportant une unité centrale informatique enregistrant les ordres d'un opérateur, connectée à une électronique de commande commandant le fonctionnement du circuit pneumatique à partir des données transmises par l'unité centrale et des signaux transmis par les capteurs à fourches électroniques.

Le centre de commande comportera avantageusement un écran connecté à l'unité centrale et informant l'opérateur du nombre de volumes secondaires restant disponible pour chaque volume primaire ou parfum.

L'unité centrale comportera une mémoire permettant d'enregistrer un positionnement de référence des volumes primaires sur les moyens de support et la forme initiale des volumes primaires de manière à permettre aux moyens de positionnement des moyens de coupe de positionner ces derniers, à partir d'une position initiale, dans une position de coupe du volume primaire, par rapport à la position de référence du volume primaire et à la forme initiale de ce dernier. L'unité centrale comportera additionnellement un logiciel de gestion et un calculateur permettant de suivre l'état ou la forme des volumes primaires au fur et à mesure des prélèvements de volumes secondaires de manière à permettre aux moyens de positionnement des moyens de coupe un positionnement de ces derniers, à partir d'une position initiale, dans une position de coupe du volume primaire, par rapport à la position de référence du volume primaire, et à la forme du volume primaire après déduction des volumes secondaires prélevés.

Le centre de commande comportera avantageusement une pluralité de boutons de commande (non représentés) disposés par exemple en façade de l'appareil selon l'invention et accessibles à l'opérateur. Par exemple, on pourra prévoir un bouton distinct pour chaque parfum ou volume primaire sélectionné et une série de bouton dont chacun correspond à un nombre de volumes secondaires désirés pour une même commande, par exemple une, deux, ou trois volumes secondaires. Il pourra avantageusement être prévu une série additionnelle de boutons de commande correspondant chacun à des menus de volumes secondaires selon des parfums spécifiques programmés préalablement dans l'unité centrale. Divers témoins lumineux et/ou témoins sonores de sécurité ou d'information pourront avantageusement être disposés en façade, par exemple correspondant à un parfum épuisé ou un nombre de volumes secondaires restants réduit. De manière conventionnelle l'appareil selon l'invention disposera de tout témoin lumineux et/ou témoin sonore de sécurité (non représentés) relatif au fonctionnement du ou des groupes froids et à la régulation des températures.

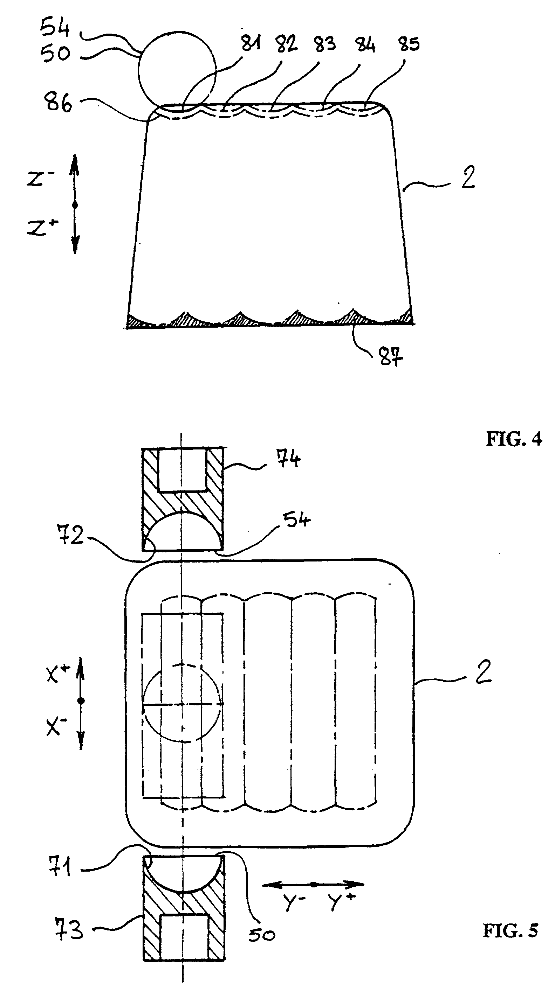

Le volume primaire 2 comme représenté sur les figures 4 et 5 est avantageusement un exemple type de volume primaire de conditionnement de crème glacée ou sorbet, en forme de pyramide tronquée à base carrée ou rectangulaire (non représentée). L'appareil selon l'invention permettra avantageusement un positionnement de volumes primaires de 2,5 litres ou de 5 litres, par exemple par l'intermédiaire de choix d'emplacements spécifiques prévus à cet effet sur les moyens de support, et par un enregistrement au choix de la valeur de volume primaire à prendre en compte dans l'unité centrale. Les moyens de coupe représentés partiellement sur les figures 4 et 5 sont ceux décrits à l'aide de la figure 3.

Sur les figures 4 et 5 on a représenté en traits forts le volume primaire avant toute coupe, et en traits mixtes fins les passes correspondant au prélèvement des volumes secondaires. Chacun des arcs de cercle 81, 82, 83, 84, 85 correspond au prélèvement d'un volume secondaire. Le volume 2 est positionné sur un emplacement prévu à cet effet sur la surface horizontale des moyens de support. L'emplacement et la forme du volume primaire étant enregistrés dans l'unité centrale comme expliqué plus haut, le volume primaire 2 est coupé successivement selon la demande de la manière suivante : A partir d'une position initiale, les moyens de coupe représentés sur les figures 4 et 5 par les blocs 73 et 74 comportant les tranchants 50 et 54 respectivement, sont amenés en position de coupe d'un premier volume secondaire comme représenté sur les figures 4 et 5, par les moyens de positionnement des moyens de coupe. Les coordonnées de positionnement des moyens de coupe selon les deux directions de l'espace X et Y, et selon la direction de l'espace Z verticale telles que représentées sur les figures 4 et 5, en fonction du choix de l'opérateur, sont déterminées par le calculateur comme expliqué plus haut et détaillé ci-dessous. La précision des coordonnées de positionnement des moyens de coupe est avantageusement donnée par l'intermédiaire de capteurs à fourche électronique pour le positionnement en X et Y dans un plan horizontal, et par l'intermédiaire de la butée 36 pour le positionnement en Z selon l'axe vertical.

Il est à noter que la position des moyens de coupe, donc des tranchants 50 et 54, par rapport au volume primaire détermine la section transversale des deux lamelles de produit alimentaire réfrigéré coupées dans le volume primaire par les deux tranchants. Cette section transversale donne, avec la longueur du volume primaire coupée selon l'axe des X sur la figure 5, la valeur du volume secondaire obtenu. Les coordonnées de positionnement des tranchants sont de ce fait programmées dans l'unité centrale en fonction de la position du volume primaire sur les moyens de support, de la forme initiale du volume primaire, du nombre de volumes secondaires déjà prélevées dans le volume primaire choisi, et évidemment du volume secondaire déterminé par les deux formes concaves 71 et 72 lorsqu'elles sont adjacentes. Le foisonnement ou la compression du volume secondaire de produit glacé est ainsi parfaitement contrôlé et maîtrisé.

La répartition de la section des lamelles selon les coordonnées X, Y, Z est programmée de manière à optimiser la coupe du volume primaire en volumes secondaires avec un minimum de produit alimentaire non distribué en fin de coupe du volume primaire, le produit alimentaire non distribuable étant représenté par la zone hachurée 87 du volume primaire 2. Sur la figure 4, cinq volumes secondaires définis par les arcs de cercles 81, 82, 83, 84, 85 respectivement sont par exemple prélevés par couche usinée du volume primaire 2. La ligne 86 en trait mixte fin délimite la forme du volume primaire après dix prélèvements de volumes secondaires, soit deux couches prélevées.

Une fois en position de coupe, les tranchants 50 et 54 sont rapprochés par l'intermédiaire du vérin 39 selon l'axe des X sur la figure 5. Les tranchants 50 et 54 mordent le volume primaire par ses faces latérales opposées et usinent chacun une lamelle dans le volume primaire. Lors du rapprochement des tranchants, chaque lamelle usinée correspondant à un tranchant est façonnée par la forme concave adjointe qui provoque un enroulement de la lamelle sur elle même pour former un volume secondaire en forme de boule avantageusement parfaite et séparée du volume primaire lorsque les tranchants 50 et 54 sont adjacents en fin de coupe comme représenté sur la figure 5 en traits mixtes fins. On relèvera que lorsque deux tranchants en vis à vis sont utilisés, le volume secondaire est avantageusement obtenu par compression des lamelles enroulées en fin de déplacement des tranchants ; l'intérêt d'utiliser deux tranchants en vis à vis est de permettre un équilibre des efforts de coupe. Dans le cas d'utilisation d'un seul tranchant par suppression d'un des blocs 73 ou 74 par exemple, le volume secondaire obtenu est creux. Il est à noter que le déplacement des tranchants est rectiligne permettant ainsi de minimiser le produit alimentaire non distribuable en fin service du volume primaire.

Le volume secondaire prélevé, est ensuite transporté au dessus du réceptacle, qui peut être par exemple un cornet ou une coupe, puis est libéré dans le réceptacle, comme indiqué précédemment. Toutefois, lorsque l'opérateur effectue une commande de trois volumes secondaires par exemple, devant être distribués dans une même coupe, l'unité centrale permet avantageusement, par l'intermédiaire du logiciel de gestion, de libérer chacun des volumes secondaires à un emplacement différent dans la coupe, de façon qu'ils soient placés de manière adjacente et éviter ainsi qu'ils ne tombent les uns sur les autres.

Les matériaux entrant dans la composition de l'appareil selon l'invention seront choisis dans tout matériau approprié compatible avec un contact alimentaire, par exemple un acier inoxydable ou analogue pour les éléments en contact avec le produit alimentaire, comme les moyens de support des volumes primaires, les moyens de coupe, les moyens de façonnage. L'énergie choisie pour le fonctionnement des moyens de positionnement des moyens de coupe, des moyens de coupe, etc, sera une énergie propre et relativement bon marché, de préférence l'air comprimé tel que décrit plus haut, ou l'énergie électrique dans le cas où les vérins pneumatiques seraient remplacés par moteur pas à pas et une transmission mécanique de type roue et vis sans fin ou analogue. L'air comprimé apporte l'avantage d'éviter sensiblement les risques de pollution des produits alimentaires en cas de panne ou de fuite.

L'appareil selon l'invention pourra comporter un dispositif de nettoyage (non représenté) des moyens de coupe et de façonnage, par exemple un dispositif de nettoyage par jet d'eau comprenant une alimentation en eau, une évacuation d'eau usée et une électrovanne commandant l'alimentation en eau. Les moyens de coupe et de façonnage pourront être ainsi nettoyés dans un logement prévu à cet effet, par exemple lorsqu'ils sont en position initiale.

L'appareil selon l'invention comportera un habillage approprié assurant une protection des composants de l'appareil et une présentation avantageusement commerciale de ce dernier, par exemple comme représenté sur la figure 1. L'appareil pourra comporter un capot 90 d'accès à la partie supérieure comportant les moyens de positionnement des moyens de coupe et les moyens de coupe. Le capot 90 pourra avantageusement être soulevé, comme représenté sur la figure 1, afin d'assurer cet accès. La partie frontale du capot 90 comportera les organes de commande et d'information de l'appareil décrits plus haut de manière que ces organes soient facilement accessibles à l'opérateur. De manière conventionnelle, l'appareil comportera tout élément 91, 92 aisément démontable d'habillage permettant d'assurer une maintenance au meilleur coût de l'appareil. L'appareil selon l'invention pourra avantageusement comprendre une porte d'accès 93 frontale aux volumes primaires pour un chargement aisé de ces derniers sur les moyens de support.

## Revendications

1. Procédé pour la coupe et la distribution d'au moins un volume secondaire d'un produit alimentaire glacé, notamment crème glacée ou sorbet, à partir d'au moins un volume primaire dudit produit alimentaire glacé, consistant à :
positionner ledit volume primaire sur des moyens de support selon une position de référence,
réfrigérer ledit volume primaire,
placer des moyens de coupe, à partir d'une position initiale, dans une première position de coupe dudit volume primaire, par rapport à ladite position de référence dudit volume primaire et à une forme initiale dudit volume primaire,
couper ledit volume primaire pour séparer un premier volume secondaire par l'intermédiaire desdits moyens de coupe,
façonner ledit premier volume secondaire selon une forme déterminée,
transporter ledit premier volume secondaire, puis libérer ledit premier volume secondaire dans un réceptacle,
placer lesdits moyens de coupe dans ladite position initiale, ***caractérisé en ce qu***'il consiste à couper ledit volume primaire en déplaçant un premier tranchant sur une partie au moins de la longueur dudit volume primaire, pour permettre l'usinage d'une première lamelle dudit volume primaire, ladite première lamelle étant apte à constituer ledit premier volume secondaire, et à façonner ledit premier volume secondaire lors dudit déplacement dudit premier tranchant.

2. Procédé selon la revendication 1, ***caractérisé en ce qu***'il consiste à couper ledit volume primaire en déplaçant un deuxième tranchant placé en vis à vis dudit premier tranchant, en sens inverse dudit premier tranchant, sur une partie au moins de la longueur dudit volume primaire, pour permettre l'usinage d'une deuxième lamelle dudit volume primaire, ladite deuxième lamelle étant apte à constituer ledit premier volume secondaire avec ladite première lamelle, et à façonner ledit premier volume secondaire lors dudit déplacement dudit deuxième tranchant.

3. Procédé selon la revendication 1 ou 2, ***caractérisé en ce qu****'il* consiste additionnellement à placer lesdits moyens de coupe dans une deuxième position de coupe dudit volume primaire par rapport à ladite position de référence dudit volume primaire, par rapport ladite forme initiale dudit volume primaire, et par rapport à une déduction dudit premier volume secondaire, couper ledit volume primaire pour séparer un deuxième volume secondaire par l'intermédiaire desdits moyens de coupe.

4. Appareil pour la coupe et la distribution d'au moins un volume secondaire de produit alimentaire glacé, notamment crème glacée ou sorbet, à partir d'au moins un volume primaire dudit produit alimentaire glacé, comprenant des moyens de support (1) dudit volume primaire (2) au moins, permettant d'établir une position de référence dudit volume primaire, des moyens de coupe (7) dudit volume primaire au moins, permettant une séparation dudit volume secondaire dudit volume primaire, des moyens de positionnement (8, 10, 12) desdits moyens de coupe, coopérant avec lesdits moyens de support dudit volume primaire au moins, pour permettre un positionnement desdits moyens de coupe en position de coupe dudit volume primaire, des moyens de façonnage (71, 72) dudit volume secondaire selon une forme déterminée, des moyens de réfrigération dudit volume primaire au moins, permettant de maintenir ledit volume primaire selon une forme et une température déterminées, des moyens de transport dudit volume secondaire, des moyens de libération (39) dudit volume secondaire dans un réceptacle, ledit appareil étant ***caractérisé en ce que*** lesdits moyens de coupe comprennent au moins un premier (50) tranchant et des premiers (39, 51, 52) moyens de déplacement dudit premier tranchant sur une partie au moins de la longueur dudit volume primaire pour permettre l'usinage d'une première lamelle dudit volume primaire, ladite première lamelle étant apte à constituer ledit volume secondaire, lesdits moyens de façonnage dudit volume secondaire étant solidaires dudit premier tranchant pour façonner ledit volume secondaire lors d'un déplacement dudit premier tranchant.

5. Appareil suivant la revendication 4, ***caractérisé en ce que*** lesdits moyens de coupe comprennent un deuxième (54) tranchant placé en vis à vis dudit premier tranchant, et des deuxièmes (39, 51, 53) moyens de déplacement dudit deuxième tranchant sur une partie au moins de la longueur dudit volume primaire pour permettre l'usinage d'une deuxième lamelle dudit volume primaire, ladite deuxième lamelle étant apte à constituer ledit volume secondaire avec ladite première lamelle, lesdits moyens de façonnage dudit volume secondaire étant solidaires dudit deuxième tranchant pour façonner ledit volume secondaire lors d'un déplacement dudit deuxième tranchant.

6. Appareil suivant les revendications 4 et 5, ***caractérisé en ce que*** lesdits moyens de façonnage comprennent une première (71) et une deuxième (72) formes concaves, une partie d'une arête libre de ladite première forme concave constituant ledit premier (50) tranchant, et une partie d'une arête libre de ladite deuxième forme concave constituant ledit deuxième (54) tranchant.

7. Appareil suivant l'une quelconque des revendications 4 à 6, ***caractérisé en ce que*** lesdits moyens de positionnement desdits moyens de coupe comprennent des premiers (8) moyens de déplacement desdits moyens de coupe selon une première (9) direction horizontale, des deuxièmes (10) moyens de déplacement desdits moyens de coupe selon une deuxième (11) direction horizontale perpendiculaire à ladite première direction horizontale, des troisièmes (12) moyens de déplacement desdits moyens de coupe selon une direction verticale (13) perpendiculaire aux dites première et deuxième directions horizontales.

8. Appareil suivant la revendication 7, ***caractérisé en ce que*** lesdits premiers, ou deuxièmes, ou troisièmes moyens de déplacement desdits moyens de coupe comprennent au moins un vérin pneumatique.

9. Appareil suivant les revendications 7 et 8, ***caractérisé en ce que*** lesdits moyens de positionnement desdits moyens de coupe comprennent au moins un capteur à fourche électronique.

10. Appareil suivant la revendication 8 ou 9, ***caractérisé en ce qu***'il comprend une butée (36) réglable en hauteur pour limiter le déplacement des moyens de coupe selon ladite direction verticale de manière réglable.

11. Appareil suivant l'une quelconque des revendications 7 à 10, ***caractérisé en ce que*** lesdits moyens de transport dudit volume secondaire comprennent au moins lesdits premiers et deuxièmes moyens de déplacement desdits moyens de coupe.

12. Appareil suivant l'une quelconque des revendications 4 à 11, ***caractérisé en ce que*** lesdits moyens de libération dudit volume secondaire comprennent lesdits premiers moyens de déplacement dudit premier tranchant.

13. Appareil suivant la revendication 12, ***caractérisé en ce que*** lesdits moyens de libération dudit volume secondaire comprennent au moins un trou (76) réalisé dans au moins une desdites première ou deuxième forme concave, ledit trou étant apte à être alimenté en air comprimé.

## Patentansprüche

1. Verfahren zum Schneiden und Verteilen mindestens eines sekundären Volumens eines gefrorenen Nahrungsmittels, insbesondere Eiscreme oder Sorbet, aus mindestens einem primären Volumen des gefrorenen Nahrungsmittels, wobei
- das primäre Volumen auf Trägermitteln in einer Referenzposition positioniert,
- das primäre Volumen gekühlt,
- Schneidemittel ausgehend von einer Anfangsposition in eine erste Position zum Schneiden des primären Volumens bezogen auf die Referenzposition des primären Volumens und bezogen auf eine Anfangsform des primären Volumens verstellt,
- das primäre Volumen zum Abtrennen eines ersten sekundären Volumens mittels der Schneidemittel geschnitten, das erste sekundäre Volumen in eine bestimmte Form geformt,
- das erste sekundäre Volumen transportiert, anschließend das erste sekundäre Volumen in einen Behälter freigegeben und
- die Schneidemittel in die Anfangsposition verstellt werden,
**dadurch gekennzeichnet,**
**dass** das primäre Volumen geschnitten wird, indem eine erste Schneidkante an mindestens einem Längenabschnitt des primären Volumens verlagert wird, um eine erste Scheibe aus dem primären Volumen zu fertigen, wobei die erste Scheibe das erste sekundäre Volumen bildet und dass das erste sekundäre Volumen während der Verlagerung der ersten Schneidkante formgebend bearbeitet wird.

2. Verfahren nach Anspruch 1,
**dadurch gekennzeichnet,**
**dass** das primäre Volumen geschnitten wird, indem eine zweite Schneidkante, die gegenüber der ersten Schneidkante angeordnet ist, in von der ersten Schneidkante entgegengesetzter Richtung an mindestens einem Längenabschnitt des primären Volumens verlagert wird, um eine zweite Scheibe aus dem primären Volumen zu fertigen, wobei die zweite Scheibe mit der ersten Scheibe das erste sekundäre Volumen bildet und dass das erste sekundäre Volumen während der Verlagerung der zweiten Schneidkante formgebend bearbeitet wird.

3. Verfahren nach Anspruch 1 oder 2,
**dadurch gekennzeichnet,**
**dass** zusätzlich die Schneidemittel in eine zweite Position zum Schneiden des primären Volumens bezogen auf die Referenzposition des primären Volumens, bezogen auf die Anfangsform des primären Volumens und bezogen auf einen Bereich, aud dem das erste sekundäre Volumen abgezogen wurde, gebracht und das primäre Volumen geschnitten wird, um ein zweites sekundäres Volumen mittels der Schneidemittel abzutrennen.

4. Vorrichtung zum Schneiden und Verteilen mindestens eines sekundären Volumens eines gefrorenen Nahrungsmittels, insbesondere Eiscreme oder Sorbet, aus mindestens einem primären Volumen des gefrorenen Nahrungsmittels, mit Trägermitteln (1) für zumindest das primäre Volumen (2), die eine Referenzposition für das primäre Volumen bilden, Schneidemitteln (7) für zumindest das primäre Volumen, die ein Abtrennen des sekundären Volumens vom primären Volumen ermöglichen, Mitteln (8, 10, 12) zum Positionieren der Schneidemittel, die mit den Trägermitteln für zumindest das primäre Volumen zusammenwirken, um die Schneidemittel in eine Schneideposition des primären Volumens zu positioniern, Mitteln (71, 72) zur Formung des sekundären Volumens entsprechend einer bestimmten Form, Mitteln zum Kühlen zumindest des primären Volumens, die das primäre Volumen in einer bestimmten Form und auf einer bestimmten Temperatur halten, Mitteln zum Transportieren des sekundären Volumens und Mitteln (39) zur Freigabe des sekundären Volumens in einen Behälter, wobei die Vorrichtung
**dadurch gekennzeichnet ist,**
**dass** die Schneidemittel mindestens eine erste Schneidkante (50) und erste Mittel (39, 51, 52) zum Verlagern der ersten Schneidkante an mindestens einem Längenabschnitt des primären Volumens umfassen, um eine erste Scheibe des primären Volumens zu fertigen, wobei die erste Scheibe das sekundäre Volumen bildet, und dass die Mittel zur Formung des sekundären Volumens mit der ersten Schneidkante fest verbunden sind, um das sekundäre Volumen während einer Verlagerung der ersten Schneidkante formgebend zu bearbeiten.

5. Vorrichtung nach Anspruch 4,
**dadurch gekennzeichnet,**
**dass** die Schneidemittel eine zweite Schneidkante (54), die gegenüber der ersten Schneidkante angeordnet ist, und zweite Mittel (39, 51, 53) zum Verlagern der zweiten Schneidkante an mindestens einem Längenabschnitt des primären Volumens umfassen, um eine zweite Scheibe des primären Volumens zu fertigen, wobei die zweite Scheibe mit der ersten Scheibe das sekundäre Volumen bildet, und dass die Mittel zur Formung des sekundären Volumens mit der zweiten Schneidkante fest verbunden sind, um das sekundäre Volumen während einer Verlagerung der zweiten Schneidkante formgebend zu bearbeiten.

6. Vorrichtung nach Anspruch 4 und 5,
**dadurch gekennzeichnet,**
**dass** die Mittel zur Formung eine erste konkave Form (71) und eine zweite konkave Form (72) umfassen, wobei ein Abschnitt einer freien Kante der ersten konkaven Form die erste Schneidkante (50) und ein Abschnitt einer freien Kante der dzweiten konkaven Form die zweite Schneidkante (54) bilden.

7. Vorrichtung nach einem der Ansprüche 4 bis 6,
**dadurch gekennzeichnet,**
**dass** die Mittel zum Positionieren der Schneidemittel erste Mittel (8) zur Verlagerung der Schneidemittel in eine erste horizontale Richtung (9), zweite Mittel (10) zur Verlagerung der Schneidemittel in eine zweite horizontale Richtung (11), die zur ersten horizontalen Richtung rechtwinklig verläuft, und dritte Mittel (12) zur Verlagerung der Schneidemittel in eine vertikale Richtung (13) umfassen, die rechtwinklig zur ersten und zweiten horizontalen Richtung verläuft.

8. Vorrichtung nach Anspruch 7,
**dadurch gekennzeichnet,**
**dass** die ersten, zweiten oder dritten Mittel zur Verlagerung der Schneidemittel mindestens einen Pneumatikzylinder umfassen.

9. Vorrichtung nach Anspruch 7 und 8,
**dadurch gekennzeichnet,**
**dass** die Mittel zum Positionieren der Schneidemittel mindestens einen Messfühler mit elektronischer Gabelung umfassen.

10. Vorrichtung nach Anspruch 8 oder 9,
**dadurch gekennzeichnet,**
**dass** sie einen in der Höhe einstellbaren Anschlag (36) umfasst, um die Verlagerung der Schneidemittel in die vertikale Richtung einstellbar zu begrenzen.

11. Vorrichtung nach einem der Ansprüche 7 bis 10,
**dadurch gekennzeichnet,**
**dass** die Mittel zum Transport des sekundären Volumens zumindest die ersten und zweiten Mittel zur Verlagerung der Schneidemittel umfassen.

12. Vorrichtung nach einem der Ansprüche 4 bis 11,
**dadurch gekennzeichnet,**
**dass** die Mittel zur Freigabe des sekundären Volumens die ersten Mittel zur Verlagerung der ersten Schneidkante umfassen.

13. Vorrichtung nach Anspruch 12,
**dadurch gekennzeichnet,**
**dass** die Mittel zur Freigabe des sekundären Volumens mindestens ein Loch (76) umfassen, das in mindestens einer der ersten oder zweiten konkaven Formen ausgebildet ist, wobei das Loch mit Druckluft versorgt werden kann.

## Claims

1. Method for cutting and dispensing at least one secondary volume of a frozen food product, especially ice-cream or sorbet, from at least one primary volume of said frozen food product, consisting in:
positioning said primary volume on support means according to a reference position,
refrigerating said primary volume,
placing cutting means, from an initial position, in a first position for cutting said primary volume, in relation to said reference position of said primary volume and to an initial shape of said primary volume,
cutting said primary volume in order to separate a first secondary volume through the agency of said cutting means,
shaping said secondary volume according to a predetermined shape,
conveying said first secondary volume, then releasing said first secondary volume into a receptacle,
placing said cutting means in said initial position, **characterised in that** it consists in cutting said primary volume by displacing a first cutting edge over a portion at least of the length of said primary volume, in order to permit the processing of a first thin section of said primary volume, said first thin section being capable of constituting said first secondary volume, and in shaping said secondary volume during said displacement of said first cutting edge.

2. Method according to claim 1, **characterised in that** it consists in cutting said primary volume by displacing a second cutting edge placed opposite said first cutting edge, in the opposite direction from said first cutting edge, over a portion at least of the length of said primary volume, in order to permit the processing of a second thin section of said primary volume, said second thin section being capable of constituting said first secondary volume with said first thin section, and in shaping said first secondary volume during said displacement of said cutting edge.

3. Method according to claim 1 or 2, **characterised in that** it consists additionally in placing said cutting means in a second position for cutting said primary volume in relation to said reference position of said primary volume, in relation to said initial shape of said primary volume, and in relation to a deduction from said first secondary volume, cutting said primary volume in order to separate a second secondary volume through the agency of said cutting means.

4. Apparatus for cutting and dispensing at least one secondary volume of a frozen food product, especially ice-cream or sorbet, from at least one primary volume of said frozen food product, comprising means (1) for supporting said primary volume (2) at least, making it possible to establish a reference position of said primary volume, means (7) for cutting said primary volume at least, permitting a separation of said secondary volume from said primary volume, means (8, 10, 12) for positioning said cutting means, co-operating with said means of supporting said primary volume at least, in order to permit the positioning of said cutting means in a position for cutting said primary volume, means (71, 72) for shaping said secondary volume according to a predetermined shape, means of refrigerating said primary volume at least, making it possible to maintain said primary volume in a predetermined shape and at a predetermined temperature, means for conveying said secondary volume, means (39) for releasing said secondary volume into a receptacle, said apparatus being **characterised in that** said cutting means comprise at least one first (50) cutting edge and first means (39, 51, 52) of displacing said first cutting edge over a portion at least of the length of said primary volume, in order to permit the processing of a first thin section of said primary volume, said first thin section being capable of constituting said secondary volume, said means of shaping said secondary volume being integrally formed with said first cutting edge in order to shape said secondary volume during a displacement of said first cutting edge.

5. Apparatus according to claim 4, **characterised in that** said cutting means comprise a second (54) cutting edge placed opposite said first cutting edge and second means (39, 51, 53) for displacing said second cutting edge over a portion at least of the length of said primary volume, in order to permit the processing of a second thin section of said primary volume, said second thin section being capable of constituting said secondary volume with said first thin section, said means of shaping said secondary volume being integrally formed with said second cutting edge in order to shape said secondary volume during a displacement of said second cutting edge.

6. Apparatus according to claims 4 and 5, **characterised in that** said shaping means comprise a first (71) and a second (72) concave mould, a portion of a free edge of said second concave mould constituting said first (50) cutting edge, and a portion of a free edge of said second concave mould constituting said second (54) cutting edge.

7. Apparatus according to any one of claims 4 to 6, **characterised in that** said means for positioning said cutting means comprise first (8) means for displacing said cutting means in a first (9) horizontal direction, second (10) means for displacing said cutting means in a second (11) horizontal direction, perpendicular to said first horizontal direction, third (12) means for displacing said cutting means in a vertical direction (13) perpendicular to said first and second horizontal directions.

8. Apparatus according to claim 7, **characterised in that** said first, or second, or third means for displacing said cutting means comprise at least one air jack.

9. Apparatus according to claims 7 and 8, **characterised in that** said means for positioning said cutting means comprise at least one electronic fork sensor.

10. Apparatus according to claim 8 or 9, **characterised in that** it comprises a height-adjustable stop (36) to limit the displacement of the cutting means in said vertical direction in an adjustable manner.

11. Apparatus according to any one of claims 7 to 10, **characterised in that** said means for conveying said secondary volume comprise at least the said first and second means of displacing said cutting means.

12. Apparatus according to any one of claims 4 to 11, **characterised in that** said means for releasing said secondary volume comprise said first means of displacing said first cutting edge.

13. Apparatus according to claim 12, **characterised in that** said means for releasing said secondary volume comprise at least one hole (76) realised in at least one of said first or second concave moulds, said hole being capable of being supplied with compressed air.
